# EUROPÄISCHE PATENTSCHRIFT

(11) **EP 0 432 246 B1**
(45) Veröffentlichungstag und Bekanntmachung des Hinweises auf die Patenterteilung: **23.03.1994**
(21) Anmeldenummer: 90909671.1
(22) Anmeldetag: 08.06.1990
(51) Int. Cl.: A47J 39/02, A47B 31/02, A47B 13/08

(54) **TISCHAUFLAGE ZUM WARMHALTEN VON SPEISEN AUF EINEM TISCH**
TABLE SURFACE FOR KEEPING FOOD ON THE TABLE WARM
USTENSILE POUR MAINTENIR AU CHAUD LES PLATS SUR UNE TABLE

(30) Priorität: 13.06.1989 DE 3919298
(43) Veröffentlichungstag der Anmeldung: 19.06.1991
(73) Patentinhaber: ELGEMA AG, CH-8022 Zürich (CH)
(72) Erfinder: HERBORG, Karlheinz, CH-8033 Zürich (CH)
(74) Vertreter: von Hellfeld, Axel, Dr. Dipl.-Phys.
(86) Internationale Anmeldenummer: EP9000899
(87) Internationale Veröffentlichungsnummer: WO9015564

(56) Entgegenhaltungen:
- FR-A- 2 507 878
- FR-A- 2 633 816
- GB-A- 2 204 477

## Beschreibung

Die Erfindung betrifft eine Tischauflage mit den Merkmalen des Oberbegriffs des Anspruchs 1, wie sie in der GB-A-2 204 477 beschrieben ist.

In Restaurants und auch im privaten Bereich besteht ein Bedarf, die servierten Speisen auf dem Eßtisch möglichst lange warmzuhalten.

Der Stand der Technik kennt hierfür Tische mit einem heizbaren mittleren Tischbein, in dem Strahlungsheizkörper angeordnet sind (DE-PS 734 523). Weiterhin sind in einen Tisch einbaubare Warmhalteplatten bekannt (DE-GM 69 12 728), in die ein elektrisches Heizelement eingesetzt ist.

Aus der DE-OS 21 45 529 ist ein Tisch bekannt, bei dem elektrisch heizbare Heizkörper in die Tischplatte eingelassen sind.

Aus dem DE-GM 77 16 836 ist ein Warmhaltetisch bekannt, der mit Heizmulden versehen ist, welche jeweils mit abnehmbaren Platten abgedeckt sind.

Aus dem DE-GM 69 41 319 schließlich ist eine Tischdecke bekannt, die aus einem Grundgewebe besteht, das an einigen ausgewählten Flächenteilen Polfäden besitzt, um eine thermische Isolierung zu erzielen, so daß an diesen Stellen abgesetzte Speisen keine Verbrennungen auf dem Tisch verursachen.

Aus der DE-PS 23 03 389 ist ein nichtgewebter, elektrisch leitender Filz mit Kohlenstoff- und Synthetikfasern bekannt, der Temperaturen bis zu 120°C aushält.

Aus der US-PS 1 657 479 ist eine elektrische Heizvorrichtung aus textilem Material bekannt, um beispielsweise Flaschen oder dergleichen warmzuhalten.

Die DE-PS 16 90 588 beschreibt eine gewebte Heizmatte aus Kett- und Schußfäden, wobei die Heiz-Schußfäden jeweils getrennte Heizbereiche bilden.

Das DE-GM 87 02 883.2 beschreibt eine elektrisch beheizbare Vorrichtung zum Warmhalten von Speisen, Getränken etc. mit einer Wärmeplatte, die unter Druck elastisch verformbar ist.

Die US-PS 2 307 231 beschreibt ein durch elektrischen Strom aufheizbares Heizband.

Aus der DE-PS 933 164 ist ein elektrisch heizbarer Textilstoff mit Metalldrähten bekannt geworden, die in Kettrichtung blank eingewebt sind.

Die GB-PS 553 804 beschreibt ein textiles Produkt mit elektrischen Strom leitenden Fäden, welches als Heizelement dienen kann.

Die DE-OS 19 11 137 offenbart einen Schutzschalter für Elektroherd-Platten, der dazu dient, die Stromzufuhr zu den Heizelementen einer Herdplatte zu unterbrechen, wenn die Platte durch kein Gewicht belastet ist.

Der Erfindung liegt die Aufgabe zugrunde, eine wirkungsvolle, ästhetisch ansprechend gestaltbare Vorrichtung zum Warmhalten von Speisen auf einem Tisch zu schaffen.

Die erfindungsgemäße Lösung dieser Aufgabe ist mit Ausgestaltungen in den Patentansprüchen gekennzeichnet.

Erfindungsgemäß sind also in bezug auf die gesamte Tischauflage lokal begrenzte und eingeschränkte textile Heizelemente vorgesehen, die lokal durch elektrischen Stromfluß heizbar sind.

Der Begriff "textile Heizelemente" ist hier sehr allgemein zu verstehen und soll beliebige Gefüge aus Fasern umfassen, insbesondere auch Filze, Gewebe, Gewirke und Gestricke. Die textilen Heizelemente weisen jeweils zumindest teilweise Fäden auf, die durch elektrischen Stromfluß auf Temperaturen heizbar sind, mit denen auf den Heizelementen abgestellte Teller, Schüsseln oder dergleichen auf die gewünschte Temperatur heizbar bzw. auf einer solchen Temperatur haltbar sind.

Als elektrisch heizbare und textil verarbeitbare Fäden sind feine Metallfasern und auch Kohlenstoff-Fasern bekannt. Die Fasern können sowohl in einem Garn oder Zwirn versponnen sein, welches bzw. welcher dann zu einem textilen Flächengebilde weiterverarbeitet wird, oder aber auch direkt durch Weben eingearbeitet werden, d.h. das textile Flächengebilde als Heizelement wird direkt durch rechtwinklige Verkreuzung von Fadensystemen (Kett- und Schußfäden) nach den Regeln der Bindungslehre hergestellt, wobei zumindest teilweise Fäden verwendet werden, die durch elektrischen Stromfluß heizbar sind.

Die Erfindung schlägt auch eine textile Tischauflage vor, bei der mehrere Stellen so gestaltet sind, daß sie Metall- und/oder Kohlenstoff-Fasern aufweisen, so daß diese abgegrenzten Bereiche wahlweise durch Anlegen einer elektrischen Spannung heizbar sind.

In einer bevorzugten Weiterbildung der Erfindung ist vorgesehen, daß die einzelnen textilen Heizelemente bzw. -flächen dann mit elektrischem Strom beschickt werden, wenn sie durch ein Gewicht belastet sind, z.B. durch einen Teller mit Speisen oder eine Schüssel oder dergleichen.

In einer anderen Ausgestaltung der erfindungsgemäßen Warmhaltevorrichtung ist vorgesehen, die textilen Heizelemente bzw. -flächen in Abhängigkeit von Temperaturdifferenzen mit Strom zu beschicken. Wird ein heißer Teller oder dergleichen auf dem Tisch abgestellt, so steigt an dieser Stelle die Temperatur stark an. Dies zeigt der Steuerung der Vorrichtung, daß zumindest derjenige Bereich, in dem die Temperaturerhöhung stattgefunden hat, geheizt werden soll, so daß die entsprechenden textilen Heizelemente bzw. -flächen mit Strom beschickt werden. Es kann hierzu die Temperatur der Vorrichtung an einer Stelle gemessen werden, die nicht geheizt werden soll (um die "Normaltemperatur" der Vorrichtung zu ermitteln) und die Temperatur an einer Stelle gemessen werden, an der ein zu heizender Teller oder dergleichen abgestellt wird. Es ist auch möglich, den zeitlichen Verlauf der Temperatur an einem Ort festzustellen.

In einer anderen bevorzugten Ausgestaltung der erfindungsgemässen Vorrichtung bzw. Tischauflage ist vorgesehen, daß der Benutzer wahlweise einzelne textile Heizelemente mittels am Tisch angebrachter Schalter wahlweise beheizt.

Die erfindungsgemäße Tischauflage kann selbst so gestaltet werden, daß sie einen ästhetisch ansprechenden Eindruck macht, also keine weitere Auflage mehr über die Heizelemente gelegt werden muß.

Es ist auch möglich, die textilen Heizelemente durch eine gesonderte Tischdecke im herkömmlichen Sinne abzudecken.

Wird die erfindungsgemäße Tischauflage einlagig hergestellt, so ist es insbesondere möglich, eine gewebte Decke zu verwenden, bei der in der Art einer Flachstickerei (Intarsien) die Heizfäden eingearbeitet sind. Es ist auch möglich, dabei eine Wirktechnik unter gleichzeitiger Verwendung der Intarsientechnik einzusetzen.

Die erfindungsgemäß vorgesehenen elektrisch leitenden, hauchdünnen Fäden werden an einer Ecke der Tischauflage zusammengeführt. Hier wird der Stromkreis (Plus- und Minus-Pol) geschlossen. An dieser Ecke wird ein Flachstecker angegossen, um der Tischauflage den Heizstrom zuzuführen.

Der Ort der flächigen, beheizbaren Heizelemente ist bevorzugt markiert, so daß der Benutzer genau erkennen kann, an welcher Stelle des Tisches ein Teller oder dergleichen beheizbar ist. Zu diesem Zweck können Markierungen dienen, die der beheizten Fläche genau angepaßt sind. Es ist auch möglich, die heizbaren Heizelemente dadurch örtlich abzuheben, daß sie in Bezug auf den Rest der Tischfläche leicht angehoben sind oder sich farblich unterscheiden

Gemäß einer anderen bevorzugten Weiterbildung der Erfindung ist vorgesehen, daß die einzelnen, lokal getrennten Heizflächen durch elektrostatisch betätigbare Sensorflächen ein- und ausschaltbar sind. Solche Sensorflächen (wie sie aus der Unterhaltungselektronik als Schalter bekannt sind) können am Rand der Tischauflage separat angeordnet werden und steuern wahlweise jeweils eine oder mehrere der Heizflächen.

Nachfolgend wird ein Ausführungsbeispiel der Erfindung anhand der Zeichnung näher beschrieben. Es zeigt:
- Fig. 1: einen Vertikalschnitt durch eine Vorrichtung zum Warmhalten von Speisen auf einem Tisch; und
- Fig. 2: eine Draufsicht auf eine Tischauflage zum Warmhalten von Speisen auf einem Tisch.

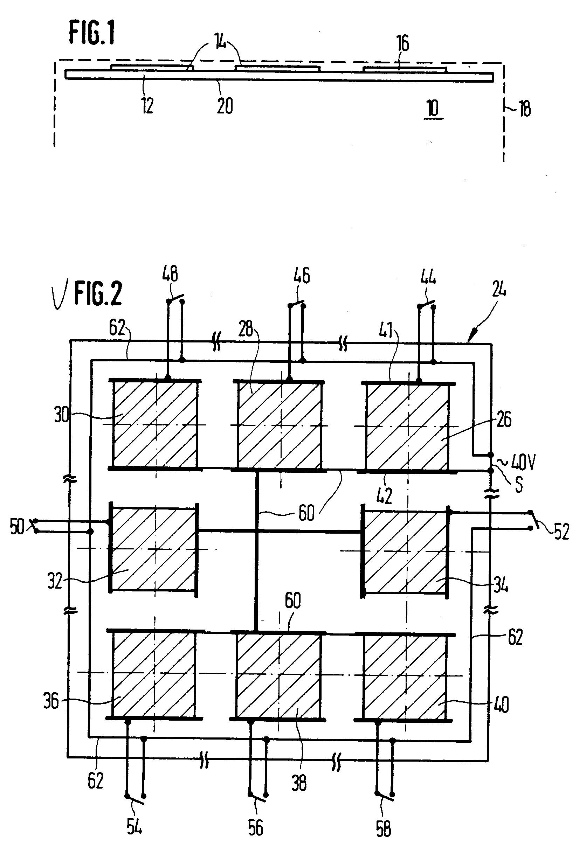

In Fig. 1 ist ein herkömmlicher Tisch mit dem Bezugszeichen (10) angedeutet. Auf dem Tisch (10) ist eine Unterlage (12) aus elektrisch und thermisch isolierendem Material gelegt. Auf der Unterlage (10) sind mehrere dünne Heizelemente (14, 16) angeordnet.

Die Schichtstärke der Heizelemente (14, 16) beträgt z.B. 0,5 mm. Beim dargestellten Ausführungsbeispiel bestehen die Heizelemente (14, 16) aus einer dünnen Schicht aus einem Material, das durch elektrischen Stromfluß heizbar ist. Geeignet hierfür ist z.B. eine dünne Kohleschicht. Ebenfalls geeignet sind Schichten aus textilem Material, in welchem Fäden verarbeitet sind, die durch elektrischen Stromfluß heizbar sind, insbesonder Metallfäden oder als solche bekannte Kohlenstoff-Fasern. Die Technik des Verwebens von Metall- und Kohlenstoff-fasern in Textilien ist aus anderen Zusammenhängen bekannt.

Bekannt sind auch sogenannte Flächenheizleiter, die durch elektrischen Stromfluß bis zu 80°C aufgeheizt werden können. Derartige drahtlose Flächenheizleiter sind unter dem Handelsnamen TERMOFLEX (Fa. Schick, D-7034 Gärtringen) bekannt. Sie dienen im Stand der Technik zur elektrischen Fußbodenheizung und werden unter Fliesen oder Estrich verlegt.

Die an die Heizelemente (14, 16) angelegte Spannung ist so bemessen, daß sie auch bei einem Defekt oder einer Beschädigung der Vorrichtung mit freiliegenden elektrischen Leitern bei Berührung durch den Menschen unschädlich ist. Die Spannung wird deshalb unterhalb von 50 V gehalten.

Eine Tischdecke (18) deckt die Heizelemente (14, 16) ab. Die thermisch isolierende Unterlage (12) hat bei voll beheizten Heizelementen (14, 16) auf ihrer Unterseite (20) nur eine Temperatur von ca. 35°C, während auf der Oberfläche der Heizelemente eine Temperatur von ca. 65°C herrscht.

Fig. 2 zeigt ein anderes Ausführungsbeispiel einer Tischauflage zum Warmhalten von Speisen in Draufsicht. Heizelemente (26, 28, 30, 32, 34, 36, 38 und 40) sind so angeordnet, daß sie etwa den Stellen des Tisches entsprechen, auf denen die Eßteller abgesetzt werden sollen. Die Tischauflage (24) besteht insgesamt aus einem textilen Gefüge, in weiches zumindest an den Orten der genannten Heizelemente elektrisch heizbare Fäden eingewebt sind. Aus anderen Zusammenhängen sind Textilien aus hochfesten Carbonfasern bekannt (SIGRATEX-Textilien der Fa. SIGRI, D-8901 Meitingen). Solche Textilien mit eingewebten Carbonfasern lassen sich für die Erfindung verwenden. Gemäß Fig. 2 ist ein Hauptschalter S vorgesehen, an dem eine Wechselspannung von 40 V anlegbar ist. Jedes der Heizelemente ist jeweils mit zwei langgestreckten Sammelleitern (41, 42) versehen, zwischen denen der Strom gleichmäßig und homogen fließt und die zwischen sich die Ausdehnung des Heizelementes definieren. Beim in Fig. 2 gezeigten Ausführungsbeispiel sind nur beim Heizelement (26) die beiden Sammelleiter mit Bezugszeichen (41, 42) versehen. Auch die übrigen Heizelemente weisen solche Sammelleiter auf.

Jedes der Heizelemente ist mit einem gesondert bedienbaren Schalter (44, 46, 48, 50, 52, 54, 56 und 58) versehen. Somit kann jeder Benutzer vor Ort das Heizelement, wenn gewünscht, einschalten.

Alternativ ist es auch möglich, die Schalter (44-58) als Druckschalter auszubilden, d.h. dann, wenn ein Teller oder dergleichen auf einem Heizelement abgestellt ist, erfolgt automatisch eine Kontaktgabe und somit eine Heizung des betreffenden Heizelementes.

Gemäß Fig. 2 liegt ein gemeinsamer Leiter (60) an allen Heizelemente, der auf Erdpotential gehalten ist und mit einem Anschluß des Schalters (S) verbunden ist. Die Spannung von beispielsweise 40 V wird über einen weiteren umlaufenden Leiter (62) übertragen, der jeweils mit dem anderen Kontakt der Schalter 44 bis 48 verbunden ist.

## Patentansprüche

1. Tischauflage (24), wobei örtlich begrenzt an den Stellen, an denen Eßgeschirr abgesetzt wird, elektrische Heizleiter in der Tischauflage (24) vorgesehen sind,
dadurch **gekennzeichnet,** daß die Heizleiter Fasern sind und daß die Fasern in die Tischauflage (24) eingewebt und/oder eingesponnen und/oder eingestickt und/oder eingewirkt sind.

2. Tischauflage nach Anspruch 1,
dadurch **gekennzeichnet,** daß die elektrisch heizbaren Stellen jeweils etwa die Größe eines Eßtellers aufweisen.

3. Tischauflage nach einem der vorhergehenden Ansprüche,
dadurch **gekennzeichnet,** daß die heizbaren Stellen (14, 16; 26, 40) zumindest teilweise aus Metallfasern bestehen.

## Claims

1. Cover (24) to be placed on the top of a table, said cover (24) having provided therein, in a locally limited manner, electric heating conductors at positions where plates and dishes would be set,
**characterized** in that the heating conductors are fibers, and in that said fibres are worked into the cover (24) by means of weaving and/or spinning and/or embroidering and/or knitting.

2. Cover according to claim 1,
**characterized** in that the electrically heatable positions each have the approximate size of a dinner-plate.

3. Cover according to any of the preceding claims,
**characterized** in that the heatable positions (14, 16; 26, 40) consist at least in part of metal fibres.

## Revendications

1. Couverture (24) à mettre sur le dessus d'une table, couverture (24) dans laquelle des conducteurs électriques de chauffage sont prévus, d'une manière localement limitée, à des positions où des pièces de vaisselle seront mises en place,
**caractérisée** en ce que les conducteurs de chauffage sont des fibres, et en ce que lesdites fibres sont incorporées dans la couverture (24) par voie de tissage et/ou de filage et/ou de broderie et/ou de tricotage.

2. Couverture à mettre sur le dessus d'une table selon la revendication 1,
**caractérisée** en ce que les positions susceptibles d'être chauffées électriquement ont, chacune, la taille approximative d'une assiette.

3. Couverture (24) à mettre sur le dessus d'une table selon l'une quelconque des revendications précédentes,
**caractérisée** en ce que les positions susceptibles d'être chauffées (14, 16; 26, 40) consistent, en partie, au moins, de fibres métalliques.
